Europäisches Patentamt

(19) European Patent Office

Office européen des brevets

(11) Veröffentlichungsnummer : **0 127 060**
**B1**

(12) # EUROPÄISCHE PATENTSCHRIFT

(45) Veröffentlichungstag der Patentschrift :
11.10.89

(51) Int. Cl.⁴ : **H 01 M   4/20**

(21) Anmeldenummer : **84105491.9**

(22) Anmeldetag : **15.05.84**

(54) Verfahren zur Herstellung von Bleipaste für Batterien.

(30) Priorität : **21.05.83 DE 3318599**

(43) Veröffentlichungstag der Anmeldung :
**05.12.84 Patentblatt 84/49**

(45) Bekanntmachung des Hinweises auf die Patenterteilung : **11.10.89 Patentblatt 89/41**

(84) Benannte Vertragsstaaten :
**DE FR GB IT**

(56) Entgegenhaltungen :
DE—A— 1 951 564
DE—A— 2 360 574
GB—A—   724 369
GB—A— 2 013 391
GB—A— 2 132 406
US—A— 1 374 076
US—A— 4 363 742

(73) Patentinhaber : **Eirich, Hubert**
**Sandweg 16**
**D-6969 Hardheim (DE)**

**Eirich, Walter**
**Spessartweg 18**
**D-6969 Hardheim (DE)**

**Eirich, Paul**
**Bahnhofstrasse 11**
**D-6969 Hardheim (DE)**

(72) Erfinder : **Eirich, Hubert**
**Sandweg 16**
**D-6969 Hardheim (DE)**
Erfinder : **Eirich, Walter**
**Spessartweg 18**
**D-6969 Hardheim (DE)**
Erfinder : **Eirich, Paul**
**Bahnhofstrasse 11**
**D-6969 Hardheim (DE)**

(74) Vertreter : **Weber, Dieter, Dr. et al**
**Dr. Dieter Weber und Dipl.-Phys. Klaus Seiffert Paten-**
**tanwälte Gustav-Freytag-Strasse 25 Postfach 6145**
**D-6200 Wiesbaden 1 (DE)**

EP 0 127 060 B1

## Beschreibung

Bei der Herstellung von Bleipaste, die ihrerseits bei der Herstellung von Batterien Verwendung findet, ist es üblich, Bleioxid mit Schwefelsäure, Wasser und gegebenenfalls bestimmten Zusatzstoffen zu vermischen. Während des Mischvorganges tritt eine stark exotherme Reaktion zwischen dem Bleioxid und der Schwefelsäure auf. Die vorliegende Erfindung betrifft ein solcher Bleipastenherstellungsverfahren.

Bei den bisherigen Verfahren zur Herstellung einer solchen Bleipaste für Batterien wird üblicherweise zunächst das Bleioxid (PbO) vorgelegt, wonach Wasser und schließlich Schwefelsäure zugesetzt wird. Manche Hersteller legen auch zunächst Wasser vor, dem sie sodann das Bleioxid und anschließend die Schwefelsäure zusetzen. Bei allen diesen bekannten Verfahren wird die Schwefelsäure mit konstanter Geschwindigkeit zugegeben. Während dieser Säurezugabe steigt die Temperatur des Gemisches infolge der exothermen Reaktion ständig an, während sie nach Beendigung der Reaktionen in dem Gemisch allmählich wieder abnimmt.

Um die Qualität der Bleipaste für die spätere Verwendung nicht zu beeinträchtigen, soll eine bestimmte Maximaltemperatur in dem Gemisch nicht überschritten werden, die hier als Grenztemperatur bezeichnet wird. Hierzu wird bei den bekannten Verfahren die Geschwindigkeit der konstanten Säurezugabe so eingestellt, daß die vorgegebene Maximaltemperatur des Gemisches etwa am Ende der exothermen Reaktionen erreicht wird, wonach das Gemisch dann durch das Aufhören der exothermen Reaktionen wieder abkühlt, ohne die vorgegebene Maximaltemperatur zu übersteigen. Eine solches Verfahren beschreibt die US-A-4 363 742.

Es ist auch bekannt (GB-A-724 369) die gesamte Schwefelsäure während eines kurzen Zeitraumes unter starkem Rühren auf einmal zuzusetzen, wobei Mischtemperaturen in der Größenordnung von 93 °C auftreten.

Die anderen bekannten Verfahren haben verschiedene Nachteile. Die Mischdauer ist verhältnismäßig lang und läßt sich bei der üblichen Verfahrensweise nicht verkürzen, ohne die zulässige Maximaltemperatur zu übersteigen. Außerdem wechseln vielfach die Produktionsparameter von Ansatz zu Ansatz in Abhängigkeit von der Maschinentemperatur, der Ausgangstemperatur der Mischungskomponenten, der Umgebungstemperatur, der Temperatur und relativen Feuchtigkeit der Kühlluft, der Feinheit bzw. spezifischen Oberfläche des Bleioxids, der Dichte der Säure, des Wartungszustandes der Kühlanlage und anderen Faktoren. Dies kann bei einzelnen Ansätzen zu einer ungewollten Überschreitung der Maximaltemperatur führen, da die konstante Säurezugabe mit einmal festgelegter Zugabegeschwindigkeit solchen Veränderungen der Produktionsparameter nicht Rechnung trägt.

Die der Erfindung zugrundeliegende Aufgabe bestand nun darin, ein verbessertes Verfahren zur Herstellung von Bleipaste für Batterien zu entwickeln. Insbesondere soll das Verfahren abgekürzt und die Möglichkeit von Verbrennungen bei einer Verschlechterung der Eigenschaften der Bleipaste vermieden werden.

Das erfindungsgemäße Verfahren zur Herstellung von Bleipaste für Batterien durch Vermischen von Bleioxid, Schwefelsäure, Wasser und gegebenenfalls üblichen Zusatzstoffen unter zumindest zeitweisem Kühlen und unter ständigen Temperaturmessungen in dem Mischgut ist Gegenstand des unabhängigen Anspruchs 1. Bevorzugte Ausgestaltungen sind Gegenstände der abhängigen Ansprüche 2-6.

Da bei diesem Verfahren zu Beginn der Säurezugabe diese mit der größtmöglichen Geschwindigkeit erfolgt, die die Mischintensität der Vorrichtung und der Temperaturunterschied zwischen der Ausgangstemperatur des Mischgutes und der Grenztemperatur zulassen, und da die Mischguttemperatur nicht nur punktuell in die Nähe der Grenztemperatur kommt, sondern während der gesamten Dauer der exothermen Reaktionen im Mischgut in der Nähe der Grenztemperatur gehalten wird, verkürzt sich die Mischdauer beträchtlich, so daß nach dem erfindungsgemäßen Verfahren einschließlich der Beschickung, der Nachmischzeit und der Entleerung die Bleipaste innerhalb weniger Minuten, wie beispielsweise innerhalb von 8 bis 15 Minuten, gewonnen werden kann.

Dabei wird auch bei wechselnder Zusammensetzung der Ansätze oder bei von Ansatz zu Ansatz wechselnden Produktionsparametern ein ungewolltes Überschreiten und damit eine Verschlechterung der Eigenschaften der Bleipaste vermieden.

Das Vermeiden einer ungewollten Überschreitung der Grenztemperatur bedeutet nicht, daß diese Grenztemperatur im Laufe des Verfahrens überhaupt nicht überschritten werden darf. Vielmehr kann es von Vorteil für die Eigenschaften der Bleipaste sein, zunächst für eine begrenzte Zeitdauer, d. h. etwa 1 bis 3 Minuten, das Mischgut auf einer über der Arbeitstemperatur und gegebenenfalls über der Grenztemperatur liegende Temperatur zwischen 70 und 90, vorzugsweise zwischen 75 und 85, wie etwa bei 80 °C zu halten und erst danach auf die Arbeitstemperatur zurückzugehen.

Vorzugsweise liegt die Arbeitstemperatur im allgemeinen im Bereich von 55 bis 65 °C, wie beispielsweise bei etwa 60 °C.

Die ständigen Temperaturmessungen in dem Mischgut werden mit in dem Mischer installierten Temperaturmeßeinrichtungen durchgeführt. Vorzugsweise sollte die Temperaturmessung berührungslos, ohne Berührung mit dem Mischgut erfolgen, wie beispielsweise mit einem Infrarotpyrometer. Vor dem Infrarotpyrometer kann ein Rohr installiert werden, in das aus einem Gebläse Luft eingeblasen wird, so daß die Luft von der Linse des Pyrometers aus zu dem dem Mischgut zugewandten Ende des Rohres strömt und auf diese Weise das Eindringen von Staub, Dämpfen und dergleichen verhindert, da diese die Linse verunreinigen würden.

Selbstverständlich kommen auch andere an sich bekannte Temperaturmeßeinrichtungen in Betracht, die eine ständige Messung der Temperatur des Mischgutes gestatten. Wenn hier von einer Temperaturmessung in dem Mischgut die Rede ist, bedeutet dies nicht, daß die Temperaturmeßeinrichtung sich im Mischgut befinden muß, sondern daß die in dem Mischgut herrschende Temperatur konstant gemessen wird.

In Abhängigkeit von der in dem Mischgut herrschenden Temperatur wird die Geschwindigkeit der Säurezugabe zur Einstellung des eingangs gekennzeichneten Temperaturprofils automatisch geregelt. Dabei kann man beispielsweise die Säure zu Beginn schneller zulaufen lassen, wobei man natürlich zu beachten hat, daß sie in dem Mischgut ausreichend schnell verteilt wird, um Verbrennungen, d. h. örtliche Überhitzungen zu vermeiden. Vor Erreichen der Grenztemperatur wird die Säurezugabe dann rechtzeitig gedrosselt, um durch die exothermen Restreaktionen der schnell zugegebenen Säure keine Überschreitung der Grenztemperatur zu bekommen. Sobald beim Abklingen der exothermen Reaktionen die Temperatur des Mischgutes wieder abnehmende Tendenz zeigt, wird die Säurezugabe dann wieder beschleunigt und auf die Arbeitstemperatur gebracht. Mit kleinen Schwankungen nach oben und unten wird die Arbeitstemperatur von da an bis zum Ende der Säurezugabe eingehalten.

Wie bei bekannten Mischverfahren zur Herstellung von Bleipaste wird auch beim vorliegenden Verfahren zumindest zeitweise gekühlt. Die Kühlung kann erfindungsgemäß zusätzlich zu der Säurezugabe eingesetzt werden, das beschriebene Temperaturprofil einzuhalten. D. h., zusätzlich zu der Säurezugabe kann in Abhängigkeit von der Temperatur des Mischgutes auch die Kühlintensität derart geregelt werden, daß die Temperatur des Mischgutes im wesentlichen auf der Höhe der Arbeitstemperatur bleibt. Dies kann durch Öffnen und Schließen einer Klappe für die Mischerkühlung geschehen, und das Öffnen und Schließen dieser Klappe wird zweckmäßig wie die Säurezugabe in Abhängigkeit von der von den Temperaturmeßeinrichtungen ermittelten Mischguttemperatur gesteuert.

Die Steuerung in dem erfindungsgemäßen Verfahren erfolgt vorteilhaft mit Hilfe eines Rechners herkömmlicher Bauart. Dieser kann gleichzeitig auch zur Steuerung des Dosier- und Wiegevorganges eingesetzt werden. Es ist auf diese Weise möglich, die Investitionskosten für die Durchführung des Verfahrens gering zu halten. Gleichzeitig mit der enormen Abkürzung des Verfahrens wird die Qualität der Bleipaste optimiert und von Charge zu Charge konstant gehalten.

Am Ende der Mischzeit kann die Temperatur des Mischgutes nochmals gemessen und die eventuell festgestellte Abweichung vom Sollwert dazu benutzt werden, um die Vorgabetemperaturen und Vorgabezeiten für die nächste Mischercharge automatisch um diesen Betrag zu korrigieren. Durch die Steuerung der Kühlintensität wird also zweckmäßig auch eine vorbestimmte Entnahmetemperatur des Mischgutes eingestellt.

Der gesamte Verfahrensablauf in seiner zeitlichen Folge sieht somit gewöhnlich so aus, daß zunächst das Bleioxid vorgelegt und sodann das Wasser zugegeben wird, wobei die Reihenfolge auch umgekehrt sein kann. Unter Einhaltung des oben beschriebenen Temperaturprofils in dem Mischgut wird dann die Schwefelsäurezugabe begonnen. Nach Zugabe der gesamten vorbestimmten Säuremenge folgt noch eine Nachmischzeit, bei der die Temperatur des Mischgutes bis zur Entleerungstemperatur abnimmt, worauf die Entleerung des Mischers erfolgt. Vom Zeitablauf kann dies beispielsweise so aussehen, daß die Beschickung von Bleioxid und Wasser zusammen etwa 2 Minuten, die Zugabe der Schwefelsäure etwa 5 bis 7 Minuten, die Nachmischzeit etwa 3 Minuten und die Entleerungszeit etwa 1 Minute betragen.

Von Bedeutung für die Bleipastenherstellung ist bekanntermaßen auch die Plastizität (Verarbeitbarkeit) der Paste. Die Plastizität der Paste wird im wesentlichen durch deren Wassergehalt und dieser seinerseits durch die Verdunstung während des Mischprozesses beeinflußt.

Es ist zweckmäßig, während des Verfahrens die Plastizität des Mischgutes innerhalb bestimmter vorgegebener Grenzen zu halten und die Plastizität des Mischgutes auf einen bestimmten Endwert zu bringen, um die Entleerung und Weiterverarbeitung der Bleipaste zu erleichtern. Die Einstellung der Plastizität des Mischgutes auf einen möglichst günstigen Dauerwert und einen vorbestimmten Endwert kann sowohl durch weitere Wasserzugabe als auch durch Beeinflussung der Verdunstung durch stärkere oder verminderte Kühlung erfolgen. Zweckmäßig ist es, auch die Einstellung der Plastizität des Mischgutes während des Verfahrensablaufs zu regeln, und zwar indirekt über die Wasserzugabe und/oder die Kühlintensität. Da beides, sowohl nachträgliche Wasserzugabe als auch Verstärkung oder Abschwächung der Kühlintensität die Temperatur des Mischgutes beeinflußt und Temperaturveränderungen im Mischgut hervorruft, wirkt sich beides automatisch auch auf die Säurezugabe aus, da über die konstante Messung der Temperatur im Mischgut und die hiervon abhängige Steuerung der Säurezugabe eine Temperaturerniedrigung im Mischgut durch Wasserzugabe oder Erhöhung der Kühlintensität automatisch zu einer Erhöhung der Säurezugabe und eine Temperaturerhöhung im Mischgut durch Verminderung der Kühlintensität zu einer Verminderung der Säurezugabe führt.

Die Plastizität der Masse wird über die Leistungsaufnahme der Mischerantriebsmotore, z. B. über ein Amperemeter oder ein Wirkleistungsmesser, überwacht. Die Zugabe des Korrekturwassers erfolgt bei Abweichungen vom Sollwert zweckmäßig nicht über festeingestellte Impulse, sondern über Impulse, deren Größe proportional zum Abstand des Ist-Wertes zum Soll-Wert geregelt wird.

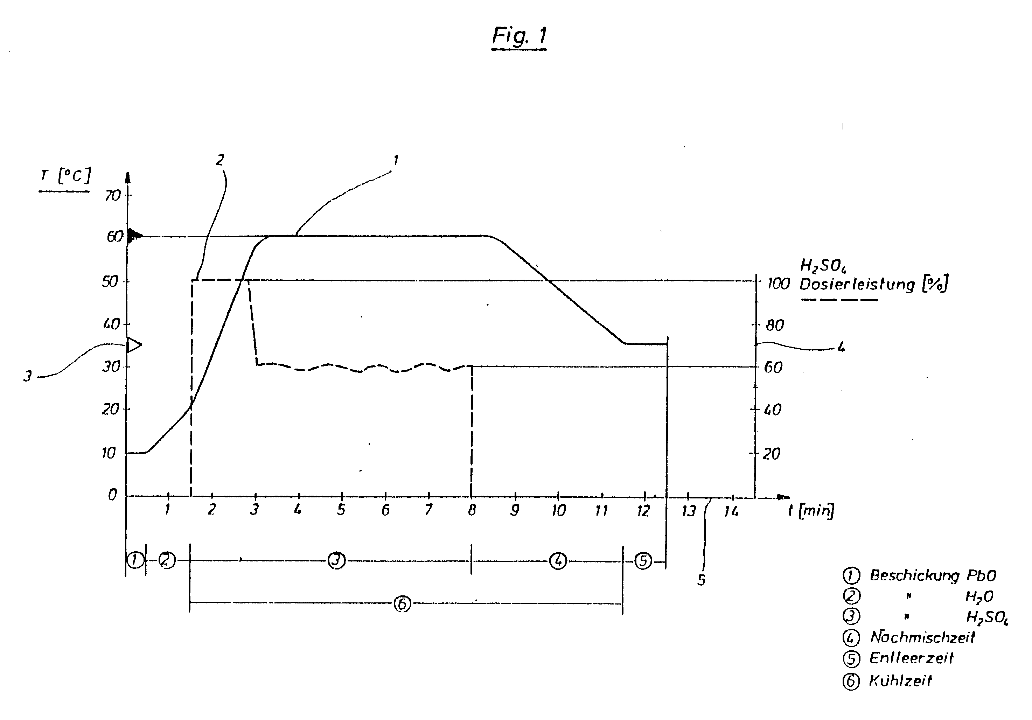

In der Zeichnung zeigen die Figuren 1 bis 3 Diagrammen die Schwefelsäurezugabe und die Temperatur des Mischgutes in Abhängigkeit von der Zeit für drei beispielhafte Ausführungsformen. Die Figuren 1 bis 3 zeigen die in den Beispielen 1 bis 3 nachfolgend geschilderten Verfahrensabläufe.

In jedem der Diagramme ist mit ausgezogener Linie (1) der Temperaturverlauf des Mischgutes und mit gestrichelter Linie (2) die Säurezugabe als Dosierleistung im Verhältnis zur Maximalleistung (= maximale Verteilgeschwindigkeit der Mischmaschine) aufgeführt. Die linke Ordinate (3) zeigt die Temperatur des Mischgutes, die rechte Ordinate (4) die Dosierleistung in Prozenten der Maximalleistung und die Abszisse (5) die Zeit innerhalb eines Mischerspieles.

Beispiel 1

Im Beispiel 1, das sich auf Figur 1 der Zeichnung bezieht, wird im Zeitabschnitt (1) Bleioxid vorgelegt und im Zeitabschnitt (2) Wasser zugegeben. Dabei entsteht bereits etwas Reaktionswärme. Im Abschnitt (3) erfolgt die Schwefelsäurezugabe.

Zu Beginn der Säurezugabe wird die Schwefelsäure mit der größtmöglichen Geschwindigkeit zugegeben, d. h. entsprechend der Maximalleistung des Mischers, bei der der Mischer die zugesetzte Schwefelsäure gerade noch ohne Verbrennungen im Mischgut verteilen kann. Kurz vor Erreichen der Arbeitstemperatur bei 60 °C wird die Säurezugabe auf 60 % der maximalen Dosierleistung reduziert und von da an etwa auf konstantem Niveau gehalten, wodurch die Temperatur des Mischgutes auf der Arbeitstemperatur von 60 °C gehalten wird.

Nach 8 Minuten am Ende der Schwefelsäurebeschickung (3) beginnt die Nachmischzeit (4) ohne weitere Säurezugabe. In dieser Nachmischzeit (4) wird das Mischgut auf die erwünschte Entleerungstemperatur abgekühlt. Der Zeitabschnitt (5) bedeutet die Entleerungszeit.

Die Kühlung läuft seit Beginn der Säurezugabe bis zum Ende der Nachmischzeit. Die Begrenzung der Temperatur des Mischgutes auf das Niveau der Arbeitstemperatur kann in diesem Fall nur durch eine Zurücknahme der Säuredosierleistung erfolgen. Die Kühlzeit ist als Zeitabschnitt (6) angegeben.

Beispiel 2

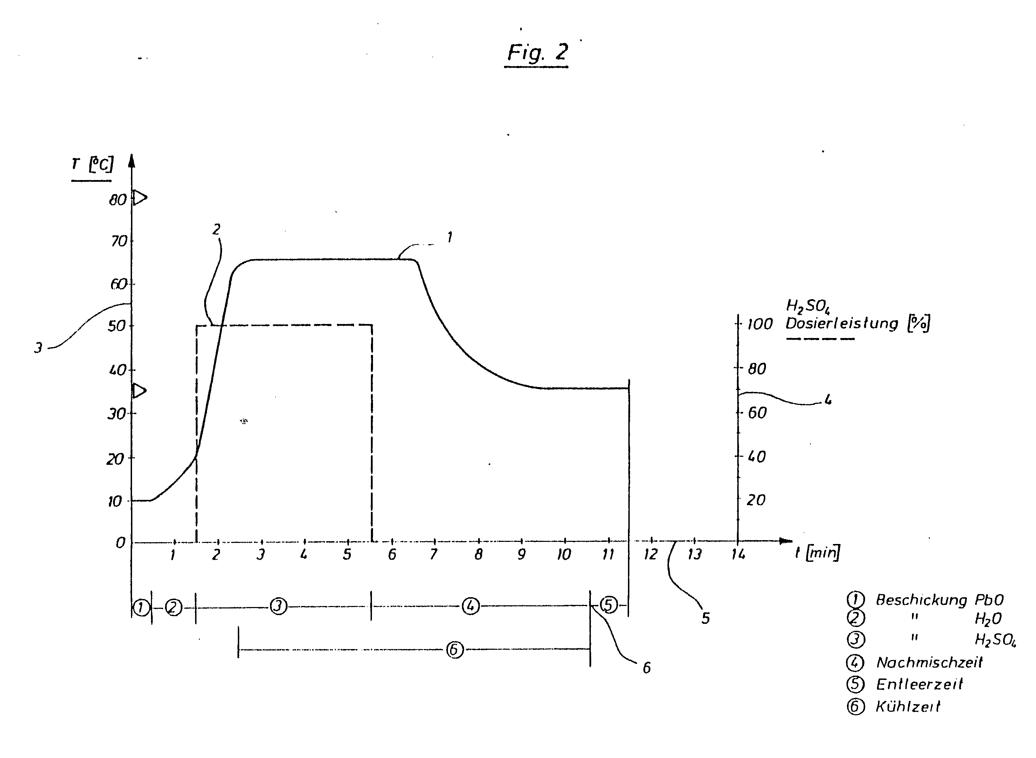

Die Verfahrensvariante des Beispiels 2 bezieht sich auf Figur 2 der Zeichnung. In dieser bedeutet wiederum Zeitabschnitt (1) den Beschickungszeitraum für Bleioxid und der Zeitabschnitt (2) den Beschickungszeit für das Wasser. Im Zeitabschnitt (3) wird die Schwefelsäure zugegeben, wobei in diesem Fall die Kühlleistung der Apparatur im Gegensatz zum Beispiel 1 größer als die durch die Reaktion zugeführte Wärme ist. Aus diesem Grund wird hier die Kühlung erst bei Erreichen der Arbeitstemperatur zugeschaltet. Die Säurezugabe wird also auf der maximalen Verteilungsgeschwindigkeit der Mischmaschine gehalten, während die Kühlung so geregelt wird, daß die Arbeitstemperatur eingehalten wird.

Nach Beendigung der Säurezugabe läuft die Kühlung mit voller Leistung bis zum Erreichen der vorbestimmten Entleerungstemperatur (35 °C) in der Nachmischzeit (4). Der Zeitabschnitt (5) bedeutet wiederum die Entleerungszeit.

Beispiel 3

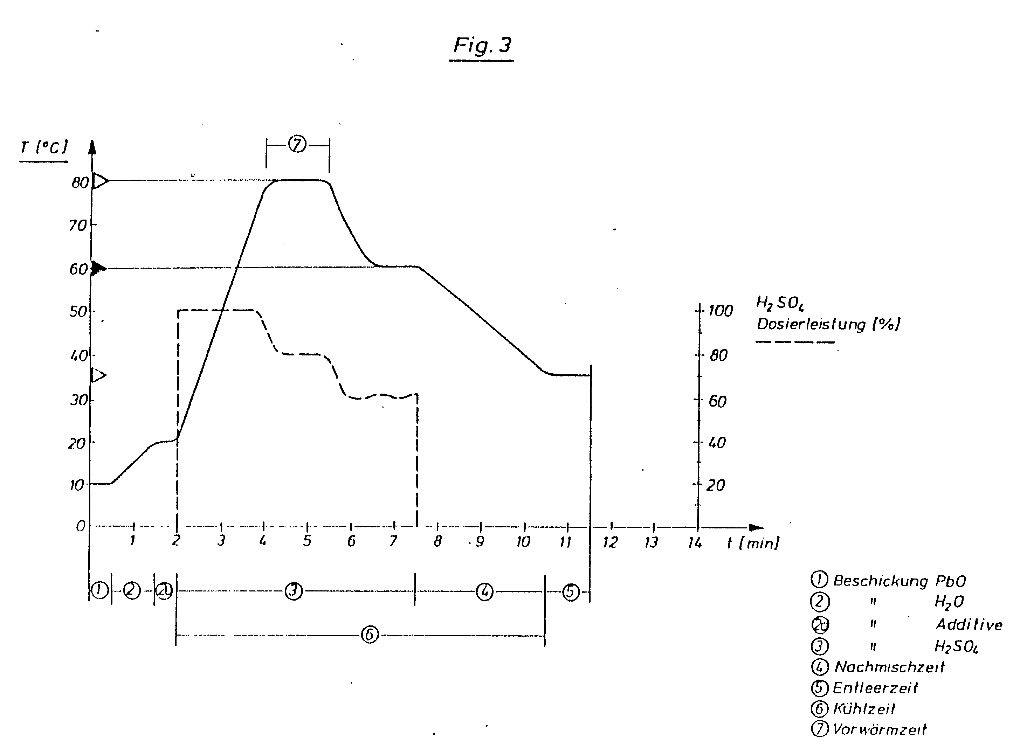

Dieses Beispiel bezieht sich auf Figur 3 der beigefügten Zeichnung. Diese Verfahrensvariante zeichnet sich dadurch aus, daß im Zeitabschnitt (2a) die Zugabe von Additiven erfolgt und daß zunächst das Gemisch auf eine bei 80 °C liegende Temperatur erhitzt wird und dann nach einer vorbestimmten Zeitdauer auf die Arbeitstemperatur von 60° zurückgesteuert wird.

Der Zeitabschnitt (1) bedeutet die Bleioxidbeschickungszeit, der Zeitabschnitt (2) bezeichnet die Wasserbeschickung und der Zeitabschnitt (2a) die Zeit für die Zuführung der Additive. Im Zeitabschnitt (3) erfolgt die Säurezugabe und zwar so, daß bis kurz vor dem Erreichen der Vorwärmtemperatur die Maximalleistung der Mischmaschine entsprechende Säuremenge zugegeben wird.

Da in diesem Beispiel wie im Beispiel 1 die Kühlleistung der Vorrichtung Kleiner als die Wärmezufuhr durch die chemische Reaktion ist, wird durch Rücknahme der Dosierleistung auf 80 % und ungefähres Konstanthalten auf dieser Höhe die Temperatur während der Vorwärmperiode (7) bei voller Kühlleistung der Apparatur auf der Temperatur von 80 °C gehalten. Nach Ablauf der Vorwärmperiode (7) wird die Dosierleistung der Säure weiter auf ca. 60 % reduziert, so daß das Mischgut auf die Arbeitstemperatur heruntergekühlt wird. Bis zum Ende der Säurezugabe wird die Dosierleistung auf dieser Höhe gehalten, so daß die Temperatur des Mischgutes auf der Arbeitstemperatur von 60° bleibt.

In der anschließenden Nachmischzeit nach Abschluß der Säurezugabe wird mit voller Kühlung das Mischgut bis auf die Entleerungstemperatur von ca. 35 °C gekühlt. Der Zeitabschnitt (5) bedeutet wieder die Entleerungszeit.

In diesem Beispiel wird also wie im Beispiel 1 während der gesamten Säurezugabe und der Nachmischzeit gekühlt. Die Kühlzeit ist wiederum mit (6) bezeichnet.

Patentansprüche

1. Verfahren zur Herstellung von Bleipaste für Batterien durch Vermischen von Bleioxid, Schwefelsäure, Wasser und gegebenenfalls üblichen Zusatzstoffen unter zumindest zeitweisem Kühlen und unter ständigen Temperaturmessungen in dem Mischgut, wobei man Säure mit einer für eine Verteilung in dem Mischgut ohne Verbrennungen zulässigen Geschwindigkeit und so schnell zugibt, daß die dem Mischgut zugeführte Wärmemenge größer als die durch Kühlen abgeführte Wärmemenge ist, dadurch gekennzeichnet, daß die Säurezugabe zunächst mit der größtmöglichen Geschwindigkeit erfolgt, wobei gegebenenfalls für 1 bis 3 Minuten eine maximale Temperatur des Mischgutes bei 70 bis 90 °C zugelassen wird und man sodann, bei einer vorbestimmten Arbeitstemperatur des Mischgutes von 50 bis 70 °C die Säurezugabe in Abhängigkeit von den ständigen Temperaturmessungen in dem Mischgut derart regelt, daß die Temperatur im wesentlichen bis zum Ende der Säurezugabe im wesentlichen auf der Höhe der Arbeitstemperatur bleibt.

2. Verfahren nach Anspruch 1, dadurch gekennzeichnet, daß man zusätzlich zu der Säurezugabe die Kühlintensität derart regelt, daß die Temperatur des Mischgutes im wesentlichen auf der Höhe der Arbeitstemperatur bleibt.

3. Verfahren nach einem der Ansprüche 1 bis 2 dadurch gekennzeichnet, daß man durch Regelung der Wasserzugabe und Kühlung die Plastizität des Mischgutes auf einen vorbestimmten Endwert bringt und die Säurezugabe auch in Abhängigkeit von dadurch verursachten Temperaturveränderungen steuert.

4. Verfahren nach Anspruch 3, dadurch gekennzeichnet, daß man durch Regelung der Wasserzugabe und Kühlung die Plastizität des Mischgutes während des Mischvorganges im wesentlichen konstant hält.

5. Verfahren nach einem der Ansprüche 1 bis 4, dadurch gekennzeichnet, daß man durch Steuerung der Kühlintensität eine vorbestimmte Entnahmetemperatur des Mischgutes einstellt.

6. Verfahren nach einem der Ansprüche 1 bis 5, dadurch gekennzeichnet, daß die Säurezugabe in Abhängigkeit von der gemessenen Temperaturzunahme so gesteuert wird, daß sie kurz bevor das Mischgut die Arbeitstemperatur von 50 bis 70 °C bzw. die vorausgehende Temperatur von 70 bis 90 °C erreicht, reduziert wird.

## Claims

1. A process for the production of lead paste for batteries by mixing lead oxide, sulphuric acid, water and optionally usual additives, with cooling at least at times and with continual measurements of temperature in the material being mixed, wherein acid is added at a rate which is permissible for distribution in the material being mixed without burning phenomena and so quickly that the amount of heat supplied to the material being mixed is greater than the amount of heat which is removed by cooling, characterised in that the addition of acid is initially effected at the highest possible rate, wherein a maximum temperature of the material being mixed at from 70 to 90 °C is possibly permitted for from 1 to 3 minutes, and then, at a predetermined working temperature of the material being mixed of from 50 to 70 °C, the addition of acid is regulated in dependence on the continual measurements of temperature in the material being mixed, in such a way that the temperature remains substantially at the level of the working temperature substantially to the end of the operation of adding acid.

2. A process according to claim 1 characterised in that in addition to the addition of acid, the intensity of the cooling action is regulated in such a way that the temperature of the material being mixed remains substantially at the level of the working temperature.

3. A process according to one of claims 1 and 2 characterised in that by regulating the addition of water and cooling, the plasticity of the material being mixed is brought to a predetermined final value and the addition of acid is also controlled in dependence on variations in temperature caused thereby.

4. A process according to claim 3 characterised in that the plasticity of the material being mixed is kept substantially constant during the mixing operation by regulating the addition of water and the cooling action.

5. A process according to one of claims 1 to 4 characterised in that a predetermined temperature for removal of the mixing material is set by controlling the intensity of the cooling action.

6. A process according to one of claims 1 to 5 characterised in that the addition of acid is controlled in dependence on the measured increase in temperature in such a way that the addition of acid is reduced just before the material being mixed reaches the working temperature of from 50 to 70 °C or the preceding temperature of from 70 to 90 °C.

## Revendications

1. Procédé pour la préparation de pâte de plomb pour batteries, par mélange d'oxyde de plomb, d'acide sulfurique, d'eau et éventuellement d'additifs habituels, tout en refroidissant au moins par intermittence, et tout en effectuant en permanence des mesures de la température du produit mélangé, dans lequel on ajoute un acide, à une vitesse maximale admissible permettant d'assurer une répartition dans le produit mélangé, sans combustion, et ce, suffisamment vite pour que la quantité de chaleur amenée au produit mélangé soit supérieure à la quantité de chaleur évacuée par refroidissement, caractérisé en ce que l'addition d'acide a lieu au moins à la vitesse maximale possible, et que, ensuite, tout en autorisant pendant éventuellement 1 à 3 minutes une température maximale du produit mélangé comprise entre 70 et 90 °C, on régule, à une température de travail prédéfinie du produit mélangé, de 50 à 70 °C, l'addition d'acide en fonction des mesures permanentes de la température dans le produit mélangé, de telle sorte que la température, essentiellement jusqu'à la fin de l'addition d'acide, se maintienne essentiellement à la valeur de la température de travail.

2. Procédé selon la revendication 1, caractérisé en ce que, outre l'addition d'acide, on régule l'intensité du refroidissement de façon que la température du produit mélangé reste essentiellement au niveau de la température de travail.

3. Procédé selon l'une des revendications 1 ou 2, caractérisé en ce que, grâce à une régulation de l'addition d'eau et à un refroidissement, on porte la plasticité du produit mélangé à une valeur finale prédéfinie, et que l'on pilote l'addition d'acide, elle aussi, en fonction des variations de température qui en découlent.

4. Procédé selon la revendication 3, caractérisé en ce qu'on maintient pratiquement constante pendant l'opération de mélange, grâce à une régulation de l'addition d'eau et du refroidissement, la plasticité du produit mélangé.

5. Procédé selon l'une des revendications 1 à 4, caractérisé en ce qu'on ajuste la température du produit mélangé à une température de soutirage prédéterminée, grâce à un pilotage de l'intensité de refroidissement.

6. Procédé selon l'une des revendications 1 à 5, caractérisé en ce que l'addition d'acide est pilotée en fonction de l'augmentation mesurée de température, de façon qu'elle soit réduite peu avant que le produit mélangé n'atteigne la température de travail de 50 à 70 °C ou la température précédente, de 70 à 90 °C.

Fig. 1

## Fig. 2

$H_2SO_4$
Dosierleistung [%]

① Beschickung PbO
② „ $H_2O$
③ „ $H_2SO_4$
④ Nachmischzeit
⑤ Entleerzeit
⑥ Kühlzeit

$t$ [min]

$T$ [°C]

# Fig. 3

① Beschickung PbO
② " $H_2O$
②a " Additive
③ " $H_2SO_4$
④ Nachmischzeit
⑤ Entleerzeit
⑥ Kühlzeit
⑦ Vorwärmzeit